# EUROPEAN PATENT SPECIFICATION

(11) **EP 4 089 813 B1**
(45) Date of publication and mention of the grant of the patent: **23.07.2025**
(21) Application number: 21787692.9
(22) Date of filing: 13.04.2021
(51) Int. Cl.: H01M 50/20

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 14.04.2020 KR 20200044969
(43) Date of publication of application: 16.11.2022
(73) Proprietor: LG Energy Solution, Ltd., Seoul 07335 (KR)
(72) Inventor: JANG, Byung Do, Daejeon 34122 (KR); KIM, Donghyun, Daejeon 34122 (KR); CHUN, Yongho, Daejeon 34122 (KR); LEE, Hyoungsuk, Daejeon 34122 (KR)
(74) Representative: Plasseraud IP
(86) International application number: PCT/KR2021/004636
(87) International publication number: WO 2021/210884

(56) References cited:
- EP-A1- 3 567 650
- DE-T5- 112008 000 148
- JP-A- 2015 011 819
- JP-A- 2017 021 996
- KR-A- 20180 113 906
- KR-B1- 101 247 390
- KR-B1- 101 608 519
- US-A1- 2017 200 926

## Description

### [Technical Field]

### CROSS-REFERENCE TO RELATED APPLICATION(S)

This application claims priority to Korean Patent Application No. 10-2020-0044969 filed in the Korean Intellectual Property Office on April 14, 2020.

The present invention relates to a battery pack and a device including the same, and more particularly, it relates to a battery pack having an improved manufacturing process, and a device including the same.

### [Background Art]

In modern society, as portable devices such as mobile phones, laptops, camcorders, and digital cameras are used in daily life, the development of technologies related to mobile devices as described above is becoming more active. In addition, as a way to solve air pollution from conventional gasoline vehicles using fossil fuels, rechargeable batteries that can be charged and discharged are used as a power source for electric vehicles (EV), hybrid electric vehicles (HEV), plug-in hybrid electric vehicles (P-HEV), and the need for rechargeable battery development is increasing.

Currently commercially available rechargeable batteries include a nickel cadmium battery, a nickel hydrogen battery, a nickel zinc battery, and a lithium rechargeable battery, and the lithium rechargeable battery is attracting attention for its merits that it has almost no memory effect compared to nickel-based rechargeable batteries, and thus it can be freely charged and discharged, has a very low self-discharge rate, and has high energy density.

These lithium rechargeable batteries mainly use lithium-based oxide and carbon materials as positive active materials and negative active materials, respectively. The lithium rechargeable battery includes an electrode assembly in which positive and negative plates respectively coated with a positive active material and a negative active material are disposed while disposing a separator therebetween, and a battery case that seals and accommodates the electrode assembly and an electrolyte solution.

In general, a lithium rechargeable battery can be classified into a can-type rechargeable battery in which the electrode assembly is built in a metal can and a pouch-type rechargeable battery in which the electrode assembly is built in a pouch of an aluminum laminate sheet according to the shape of the exterior material.

In the case of a rechargeable battery used in small devices, 2 to 3 battery cells are disposed, but in the case of a rechargeable battery used in a medium or large device such as an automobile, a battery module in which a plurality of battery cells are electrically connected is used. In such a battery module, a plurality of battery cells are serially or coupled in parallel to form a battery cell stack, and thus capacity and output are improved. In addition, at least one battery module may be mounted together with various control and protection systems such as a battery management system (BMS) and a cooling system to form a battery pack.

The battery module may include a battery cell stack where a plurality of battery cells are stacked, and a frame receiving the battery cell stack.

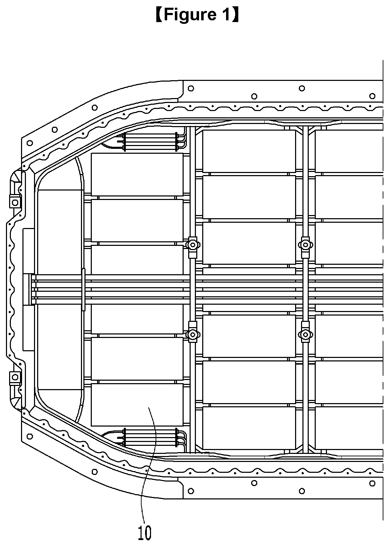

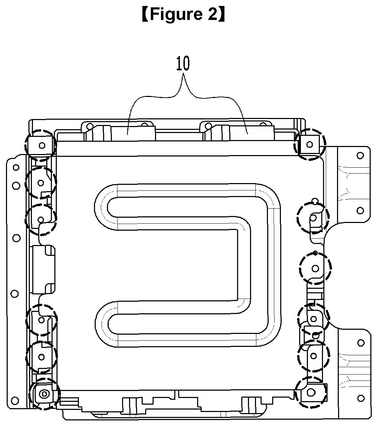

FIG. 1 shows a conventional battery pack where a plurality of battery modules are received in a pack frame, and FIG. 2 is a top plan view illustrating the number of fastening points required for two battery modules to be fixed to the pack frame of FIG. 1. In particular, FIG. 2 is a top plan view of a figure that two battery modules 10 provided as a pair are covered by a cover.

Referring to FIG. 1 and FIG. 2, the conventional battery pack is formed by accommodating a plurality of battery modules 10 in a pack frame. Although it is important to compactly dispose a plurality of battery modules 10 in the pack frame for high power and large capacity, as the number of battery modules 10 in the battery pack increases, the number of necessary parts increases and the internal structure and assembly process are complicated. Specifically, as marked by dotted lines in FIG. 2, a plurality of fastening points are required to fix the two battery modules 10 to the pack frame. Since each of the plurality of battery modules 10 needs a fastening point, the number of parts required increases, and the assemble process is inevitably more complicated in the conventional battery packs.

As the demand for high power and large capacity battery packs continues, it is substantially necessary to develop a battery module that can satisfy these requirements while reducing the number of required parts and improving the assemble process.

### [Disclosure]

### [Technical Problem]

Embodiments of the present invention have been made to solve the above problems of the previously proposed methods, and is to provide a battery pack with an improved assembly process with a capacity increase, and a device including the same.

However, the problems to be solved by the embodiments of the present invention are not limited to the above-described problems and can be variously expanded in the range of technical ideas included in the present invention.

### [Technical Solution]

A battery pack according to an embodiment of the present invention includes: a battery module that includes a battery cell stack where a plurality of battery cells are stacked; and a pack frame that accommodates the battery module, wherein the pack frame includes a bottom portion where the battery module is positioned, and a guide pin protruded upward from the bottom portion, the battery module includes a guide portion where a guide hole is formed and a mounting portion for fixing the battery module, and, when the battery module is accommodated in the pack frame, the guide pin passes through the guide hole.

The battery module may be fixed to the pack frame through the mounting portion.

A mounting hole may be formed in the mounting portion, a fastening hole may be formed in a position of the bottom portion of the pack frame corresponding to the mounting hole, and wherein the battery pack may include a mounting bolt coupled to the fastening hole through the mounting hole.

The guide portion and the mounting portion may protrude along a direction that is parallel with the bottom portion, and the guide hole and the mounting hole may be formed while penetrating along a direction that is perpendicular to the bottom portion.

The guide portion and the mounting portion may be respectively provided in plural.

The guide portion and the mounting portion may be formed in a front side and a rear side of the battery module.

The battery module includes a module frame that accommodates the battery cell stack, and an end plate, and the end plate is disposed in a front side and a rear side of the battery cell stack.

The mounting portion and the guide portion are formed in the end plate.

Two mounting portions may be respectively disposed in a front side and a rear side of the battery module, and the guide portion may be disposed between the two mounting portions, or on an outer side of the two mounting portions.

A front side of the battery module may face another adjacent battery module, a guide portion disposed in the front side of the battery module may be disposed between the two mounting portions, and a guide portion disposed in the rear side of the battery module may be disposed at an outer side of the two mounting portions.

### [Advantageous Effects]

According to the embodiments of the present invention, it is possible to provide a large capacity battery module with an increased number of battery cells included therein, and simultaneously, in accommodating the large capacity battery module in a pack frame through a guide pin structure, a manufacturing process can be improved

In addition, since the number of fixing portions can be reduced, cost can be reduced and the assemble process can be simplified.

### [Description of the Drawings]

FIG. 1 shows a conventional battery pack where a plurality of battery modules are received in a pack frame.
FIG. 2 is a top plan view illustrating the number of fastening points required for two battery modules to be fixed to the pack frame of FIG. 1.
FIG. 3 is a perspective view of a battery module according to an embodiment of the present invention.
FIG. 4 is a perspective view of a battery pack in which the battery module is received in a pack frame.
FIG. 5 is an enlarged partial view of the part "A" of FIG. 4.
FIG. 6 is a top plan view of alignment form of battery modules according to the embodiment of the present invention.

### [Mode for Invention]

Hereinafter, the present invention will be described more fully hereinafter with reference to the accompanying drawings, in which embodiments of the invention are shown. The present invention may be implemented in several different forms and is not limited to the embodiments described herein.

The drawings and description are to be regarded as illustrative in nature and not restrictive. Like reference numerals designate like elements throughout the specification.

In addition, since the size and thickness of each configuration shown in the drawings are arbitrarily indicated for better understanding and ease of description, the present invention is not necessarily limited to the drawings. In the drawings, the thickness of layers, films, panels, regions, etc., are exaggerated for clarity. In addition, in the drawings, the thickness of some layers and regions is exaggerated for better understanding and ease of description.

**It** will be understood that when an element such as a layer, film, region, or substrate is referred to as being "on" another element, it can be directly on the other element or intervening elements may also be present. In contrast, when an element is referred to as being "directly on" another element, there are no intervening elements present. Further, throughout the specification, the word "on" a target element will be understood to mean positioned above or below the target element, and will not necessarily be understood to mean positioned "at an upper side" based on an opposite to gravity direction.

In addition, unless explicitly described to the contrary, the word "comprise" and variations such as "comprises" or "comprising" will be understood to imply the inclusion of stated elements but not the exclusion of any other elements.

Further, throughout the specification, the phrase "on a plane" means viewing a target portion from the top, and the phrase "on a cross-section" means viewing a cross-section formed by vertically cutting a target portion from the side.

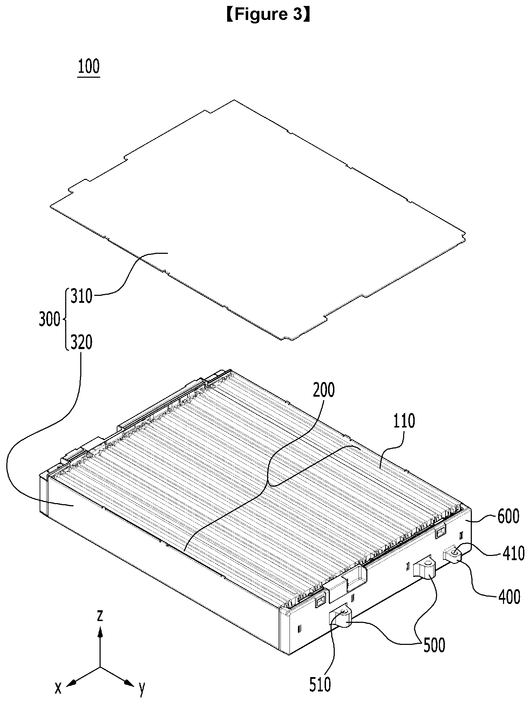

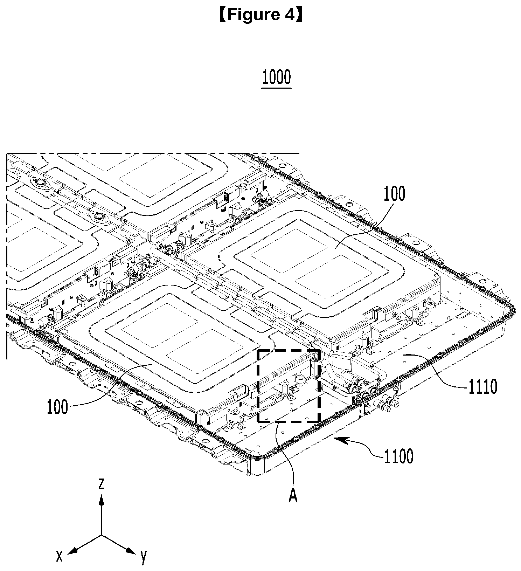

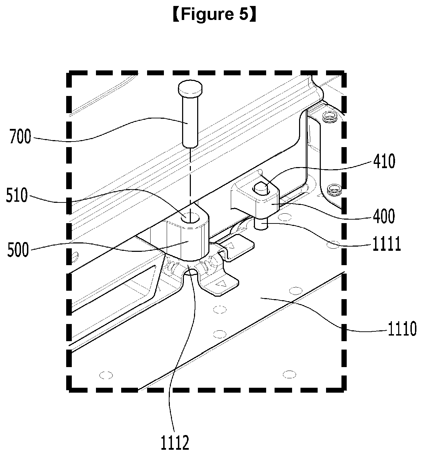

FIG. 3 is a perspective view of a battery module according to an embodiment of the present invention. FIG. 4 is a perspective view of a battery pack in which the battery module is received in a pack frame. FIG. 5 is an enlarged partial view of the part "A" of FIG. 4. In particular, in FIG. 3, an upper cover 310 is separated for convenience of description.

Referring to FIG. 3 to FIG. 5, a battery pack 1000 according to an embodiment of the present invention include a battery module 100 including a battery cell stack 200 where a plurality of battery cells 110 are stacked and a pack frame 1100 the accommodates the battery module 100. The pack frame 1100 includes a bottom portion 1110 where the battery module 100 is positioned, and a guide pin 1111 that protrudes upward from the bottom portion 1110. The battery module 100 includes a guide portion 400 where a guide hole 410 is formed and a mounting portion 500 for fixing the battery module 100, and when the battery module 100 is accommodated in the pack frame 1100, the guide pin 1111 passes through the guide hole 410. Structures of the guide pin 1111 and the guide hole 410 will be described in detail later with reference to FIG. 5.

The battery cell 110 is preferably a pouch-type battery cell. The pouch-type battery cell may be formed by receiving an electrode assembly in a laminate-sheet pouch case including a resin layer and a metal layer, and then thermally sealing a sealing portion of the pouch case. Such a battery cell 110 may be formed in a rectangular sheet-like structure.

The battery cells 110 may be formed in plural, and a plurality of battery cells 110 are stacked to be electrically connected to each other to form a battery cell stack 120. In particular, as shown in FIG. 3, the plurality of battery cells 110 may be stacked along a direction that is parallel with the x-axis.

In this case, the battery cell stack 120 according to the present embodiment may be a large scaled module in which the number of battery cells 110 is greater than that of the prior art. For example, 48 battery cells 110 may be included in each battery module 100. In case of such a large scaled module, a horizontal directional length of the battery module is increased. Here, the horizontal directional length may imply a direction where the battery cells 110 are stacked, that is, a length in a direction that is parallel with the x-axis.

The battery module 100 may include a module frame 300 that accommodates the battery cell stack 200, and an end plate 600.

The module frame 300 that accommodates the battery cell stack 200 may include an upper cover 310 and a U-shaped frame 320.

The U-shaped frame 320 is a frame having a U-shaped structure, and may cover a bottom surface (z-axis opposite direction) and both lateral sides (x-axis direction and its opposite direction) of the battery cell stack 200.

The upper cover 310 may be formed in a plate-shaped structure surrounding the remaining upper surface (z-axis direction) except for the lower surface and the both lateral sides covered by the U-shaped frame 320. The upper cover 310 and the U-shaped frame 320 are combined by welding or the like in a state in which corresponding corner portions are in contact with each other, thereby forming a structure that covers the battery cell stack 200 vertically and horizontally. It is possible to physically protect the battery cell stack 200 through the upper cover 310 and the U-shaped frame 320. To this end, the upper cover 310 and the U-shaped frame 320 may include a metal material having predetermined strength.

Meanwhile, although not specifically shown, the module frame 300 according to an exemplary variation may be a mono frame in the form of a metal plate in which an upper surface, a lower surface, and both lateral sides are integrated. That is, it is not a structure in which the U-shaped frame 310 and the upper cover 320 are coupled to each other, but is a structure manufactured by extrusion molding, and thus the upper surface, the lower surface, and both lateral sides are integrated.

The end plate 600 may be formed to cover the battery cell stack 200 by being positioned on a first open side (y-axis direction) and a second open side (direction opposite to the y-axis direction) of the module frame 300. Such an end plate 600 may physically protect the battery cell stack 200 and other electronic devices from external impact.

Meanwhile, although it is not specifically illustrated, and a bus bar frame where a bus bar is mounted and an insulation cover for electrical insulation may be disposed between the battery cell stack 200 and the end plate 600.

The end plate 600 may be positioned on the front (opposite y-axis direction) and rear (y-axis direction) of the battery cell stack 200. Such an end plate 600 is formed to cover the battery cell stack 200, and it is possible to physically protect the battery cell stack 200 and other electronic devices from external impact.

Referring to FIG. 5, as previously described, the battery module 100 includes a guide portion 400 where a guide hole 410 is formed, and a mounting portion 500 for fixing the battery module 100. In this case, the guide portion 400 and the mounting portion 500 may be formed on the front side (y-axis opposite direction) and the rear side (y-axis direction) of the battery module 100, and more specifically, on the end plate 600.

A mounting hole 510 may be formed in the mounting portion 500. The mounting portion 500 may protrude along a direction that is parallel with the bottom portion 1110 of the pack frame 1100, and the mounting hole 510 may penetrate a direction that is perpendicular to the bottom portion 1110 of the pack frame 1100.

A fastening hole 1112 may be formed at a position corresponding to the mounting hole 510 in the bottom portion 1110 of the pack frame 1100.

The battery pack 1000 according to the present embodiment may further include a mounting bolt 700 that passes through the mounting hole 510 and thus is coupled to the fastening hole 1112. That is, the mounting bolt 700 passes through the mounting hole 510 and is bolt and nut coupled with the fastening hole 1112, and thus the battery module 100 can be fixed to the pack frame 1100. For effective fixing, the mounting portion 500 and the mounting bolt 700 applied to each battery module 100 are preferably provided in plural.

Since the battery module 100 according to the present embodiment is large scaled module, the volume or weight increases compared to the conventional battery module, and thus there may be difficulties in mounting and fixing the battery module 100 through the mounting part 500.

Thus, the battery module 100 according to the present embodiment is provided with the guide portion 400 to accommodate the large scaled battery module 100 in the pack frame 1100, thereby simplifying an assembling process. As described above, the guide hole 410 is formed in the guide portion 400. The guide portion 400 may protrude along a direction that is parallel with the bottom portion 1110 of the pack frame 1100, and the guide hole 410 may penetrate a direction that is perpendicular to the bottom portion 1110 of the pack frame 1100.

Specifically, when the battery module 100 is accommodated in the pack frame 1100 before being fixed through the mounting portion 500, a guide pin 1111 protruding upward from the bottom portion 1110 of the pack frame 1100 is set to pass through the guide hole 410. Through this, the battery module 100 with increased volume or weight can be positioned more accurately and stably at a predetermined place on the pack frame 1100, and it is also easy to match the mounting hole 510 and the fastening hole 1112 with each other. For accurate position setting, the guide portion 400 applied to each battery module 100 is preferably provided in plural.

On the other hand, since the battery module 100 according to the present embodiment is a large scaled module, the battery module 100 has a large volume, and thus even through it is a pack frame 1100 of the same size, the number of battery modules 100 accommodated in the pack frame 1100 is reduced compared to the prior art. That is, even though the number of battery modules 100 is reduced, it is possible to manufacture a battery pack 1000 having the same capacity and output. In this case, since the number of battery modules 100 in the battery pack 1000 is reduced, the total number of fixing portions such as the mounting bolt 700 required for the battery pack 1000 is reduced. That is, cost reduction and simplification of the assemble process become possible.

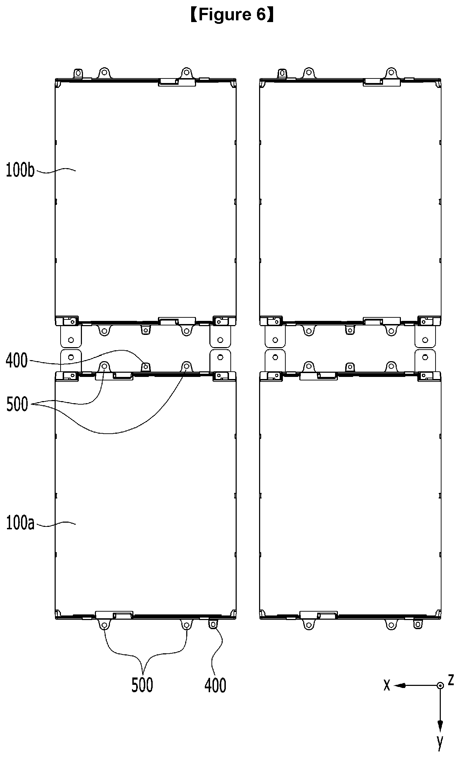

FIG. 6 is a top plan view of alignment form of battery modules according to the embodiment of the present invention. Configurations other than the battery module are omitted for convenience of explanation.

Referring to FIG. 6, as previously described, the guide portion 400 and the mounting portion 500 may be formed on the front (opposite the y-axis direction) and rear (y-axis direction) of the battery module 100.

Two mounting portions 500 may be disposed respectively on the front and rear surfaces of the battery module 100a, and the guide portion 400 may be disposed between the two mounting portions 500 or on the outside of the two mounting portions 500.

More specifically, the front side of the battery module 100a faces another adjacent battery module 100b, the guide portion 400 disposed on the front of the battery module 100a is disposed between the two mounting portions 500, and the guide portion 400 disposed on the rear side of the battery module 100a may be disposed on the outside of the two mounting portions 500.

In the present embodiment, terms indicating directions such as before, after, left, right, up, and down are used, but these terms are used for convenience of explanation only, and may vary depending on the position of the object or the position of the observer.

One or more battery modules according to the present embodiment described above may be mounted together with various control and protection systems such as a battery management system (BMS) and a cooling system to form a battery pack.

The battery module or battery pack can be applied to various devices. Specifically, it can be applied to transportation means such as electric bicycles, electric vehicles, hybrids, and the like, but is not limited thereto, and can be applied to various devices that can use secondary batteries.

While this invention has been described in connection with what is presently considered to be practical embodiments, it is to be understood that the invention is not limited to the disclosed embodiments. On the contrary, it is intended to cover various modifications included within the scope of the appended claims.

### Description of symbols

100: battery module
110: battery cell
200: battery cell stack
300: module frame
400: guide portion
410: guide hole
500: mounting portion
510: mounting hole
600: end plate
700: mounting bolt

## Claims

1. A battery pack (1000) comprising:
a battery module (100) that includes a battery cell stack (200) where a plurality of battery cells (110) are stacked; and
a pack frame (1100) that accommodates the battery module,
wherein the pack frame comprises a bottom portion (1110) where the battery module is positioned, and a guide pin (1111) protruded upward from the bottom portion,
the battery module comprises a guide portion (400) where a guide hole (410) is formed and a mounting portion (500) for fixing the battery module, and
when the battery module is accommodated in the pack frame, the guide pin passes through the guide hole,
wherein the battery module comprises a module frame (300) that accommodates the battery cell stack, and an end plate (600), and
the end plate is disposed in a front side and a rear side opposite the front side of the battery cell stack,
**characterized in that** the mounting portion and the guide portion are formed in the end plate.

2. The battery pack of claim 1, wherein
the battery module is fixed to the pack frame through the mounting portion.

3. The battery pack of claim 2, comprising:
a mounting hole (510) is formed in the mounting portion,
a fastening hole (1112) is formed in a position of the bottom portion of the pack frame corresponding to the mounting hole, and
wherein the battery pack comprises a mounting bolt (700) coupled to the fastening hole through the mounting hole.

4. The battery pack of claim 3, wherein
the guide portion and the mounting portion protrude along a direction that is parallel with the bottom portion, and
the guide hole and the mounting hole are formed while penetrating along a direction that is perpendicular to the bottom portion.

5. The battery pack of claim 1, wherein
the guide portion and the mounting portion are respectively provided in plural.

6. The battery pack of claim 1, wherein
the guide portion and the mounting portion are formed in a front side and a rear side of the battery module.

7. The battery pack of claim 1, wherein
two mounting portions are respectively disposed in a front side and a rear side of the battery module, and
the guide portion is disposed between the two mounting portions, or on an outer side of the two mounting portions.

8. The battery pack of claim 7, wherein
a front side of the battery module faces another adjacent battery module,
a guide portion disposed in the front side of the battery module is disposed between the two mounting portions, and
a guide portion disposed in the rear side of the battery module is disposed at an outer side of the two mounting portions.

9. A device comprising the battery pack of claim 1.

## Patentansprüche

1. Batteriepack (1000), umfassend:
ein Batteriemodul (100), welches einen Batteriezellenstapel (200) umfasst, in welchem eine Mehrzahl von Batteriezellen (110) gestapelt sind; und
einen Packrahmen (1100), welcher das Batteriemodul aufnimmt,
wobei der Packrahmen einen unteren Abschnitt (1110), an welchem das Batteriemodul positioniert ist, und einen Führungsstift (1111) umfasst, welcher von dem unteren Abschnitt nach oben hervorsteht,
wobei das Batteriemodul einen Führungsabschnitt (400), an welchem ein Führungsloch (410) gebildet ist, und einen Montageabschnitt (500) zum Fixieren des Batteriemoduls umfasst, und
wenn das Batteriemodul in dem Packrahmen aufgenommen ist, der Führungsstift durch das Führungsloch verläuft,
wobei das Batteriemodul einen Modulrahmen (300), welcher den Batteriezellenstapel aufnimmt, und eine Endplatte (600) umfasst, und
wobei die Endplatte in einer vorderen Seite und einer hinteren Seite entgegengesetzt zu der vorderen Seite des Batteriezellenstapels angeordnet ist,
**dadurch gekennzeichnet, dass** der Montageabschnitt und der Führungsabschnitt in der Endplatte gebildet sind.

2. Batteriepack nach Anspruch 1, wobei
das Batteriemodul an dem Packrahmen mittels des Montageabschnitts fixiert ist.

3. Batteriepack nach Anspruch 2, umfassend:
ein Montageloch (510), welches in dem Montageabschnitt gebildet ist,
ein Befestigungsloch (1112), welches an einer Position des unteren Abschnitts des Packrahmens gebildet ist, welche dem Montageloch entspricht, und
wobei der Batteriepack einen Montagebolzen (700) umfasst, welcher mit dem Befestigungsloch mittels des Montagelochs gekoppelt ist.

4. Batteriepack nach Anspruch 3, wobei
der Führungsabschnitt und der Montageabschnitt entlang einer Richtung hervorstehen, welche mit dem unteren Abschnitt parallel ist, und
das Führungsloch und das Montageloch während eines Durchdringens entlang einer Richtung gebildet werden, welche senkrecht zu dem unteren Abschnitt ist.

5. Batteriepack nach Anspruch 1, wobei
Der Führungsabschnitt und der Montageabschnitt jeweils in einer Mehrzahl bereitgestellt sind.

6. Batteriepack nach Anspruch 1, wobei
der Führungsabschnitt und der Montageabschnitt in einer vorderen Seite und einer hinteren Seite des Batteriemoduls gebildet sind.

7. Batteriepack nach Anspruch 1, wobei
zwei Montageabschnitte jeweils in einer vorderen Seite und einer hinteren Seite des Batteriemoduls angeordnet sind, und
der Führungsabschnitt zwischen den zwei Montageabschnitten oder an einer äußeren Seite der zwei Montageabschnitte angeordnet ist.

8. Batteriepack nach Anspruch 7, wobei
eine vordere Seite des Batteriemoduls einem anderen benachbarten Batteriemodul zugewandt ist,
ein Führungsabschnitt, welcher in der vorderen Seite des Batteriemoduls angeordnet ist, zwischen den zwei Montageabschnitten angeordnet ist, und
ein Führungsabschnitt, welcher in der hinteren Seite des Batteriemoduls angeordnet ist, an einer äußeren Seite der zwei Montageabschnitte angeordnet ist.

9. Vorrichtung, umfassend den Batteriepack nach Anspruch 1.

## Revendications

1. Bloc-batterie (1000) comprenant :
un module de batterie (100) qui comporte un empilement d'éléments de batterie (200) dans lequel une pluralité d'éléments de batterie (110) sont empilés ; et
un cadre de bloc (1100) qui loge le module de batterie,
dans lequel le cadre de bloc comprend une partie basse (1110) où le module de batterie est positionné, et une goupille de guidage (1111) faisant saillie vers le haut à partir de la partie basse,
le module de batterie comprend une partie de guidage (400) où un trou de guidage (410) est formé et une partie de montage (500) pour fixer le module de batterie, et
lorsque le module de batterie est logé dans le cadre de bloc, la goupille de guidage traverse le trou de guidage,
dans lequel le module de batterie comprend un cadre de module (300) qui loge l'empilement d'éléments de batterie, et une plaque d'extrémité (600), et
la plaque d'extrémité est disposée dans un côté avant et un côté arrière opposé au côté avant de l'empilement d'éléments de batterie,
**caractérisé en ce que** la partie de montage et la partie de guidage sont formées dans la plaque d'extrémité.

2. Bloc-batterie selon la revendication 1, dans lequel
le module de batterie est fixé au cadre de bloc par l'intermédiaire de la partie de montage.

3. Bloc-batterie selon la revendication 2, comprenant :
un trou de montage (510) formé dans la partie de montage,
un trou d'attache (1112) formé dans une position de la partie basse du cadre de bloc correspondant au trou de montage, et
dans lequel le bloc-batterie comprend un boulon de montage (700) couplé au trou d'attache à travers le trou de montage.

4. Bloc-batterie selon la revendication 3, dans lequel
la partie de guidage et la partie de montage font saillie le long d'une direction qui est parallèle à la partie basse, et
le trou de guidage et le trou de montage sont formés tout en pénétrant le long d'une direction qui est perpendiculaire à la partie basse.

5. Bloc-batterie selon la revendication 1, dans lequel
la partie de guidage et la partie de montage sont respectivement prévues au pluriel.

6. Bloc-batterie selon la revendication 1, dans lequel
la partie de guidage et la partie de montage sont formées dans un côté avant et un côté arrière du module de batterie.

7. Bloc-batterie selon la revendication 1, dans lequel
deux parties de montage sont disposées respectivement dans un côté avant et un côté arrière du module de batterie, et
la partie de guidage est disposée entre les deux parties de montage, ou sur un côté extérieur des deux parties de montage.

8. Bloc-batterie selon la revendication 7, dans lequel
un côté avant du module de batterie fait face à un autre module de batterie adjacent,
une partie de guidage disposée dans le côté avant du module de batterie est disposée entre les deux parties de montage, et
une partie de guidage disposée dans le côté arrière du module de batterie est disposée sur un côté extérieur des deux parties de montage.

9. Dispositif comprenant le bloc-batterie selon la revendication 1.
